# EUROPÄISCHE PATENTANMELDUNG

(11) **EP 1 128 116 A2**
(43) Veröffentlichungstag der Anmeldung: **29.08.2001**
(21) Anmeldenummer: 01104210.8
(22) Anmeldetag: 22.02.2001
(51) Int. Cl.: F16L 19/02

(54) **Rohranschluss mit einem Anschlussteil und mit wenigstens einem Rohr**

(30) Priorität: 26.02.2000 DE 10009138
(71) Anmelder: Anton Hummel Verwaltungs-GmbH, D-79183 Waldkirch (DE)
(72) Erfinder:
(74) Vertreter: Maucher, Wolfgang, Dipl.-Ing.

(57) **Zusammenfassung**

Ein Rohranschluß (10) besteht im wesentlichen aus einem Anschlußteil (1) und dem anzuschließenden Rohr (2) sowie einem Überwurfteil (5), beispielsweise einer Überwurfmutter, die mit dem Anschlußteil (1) verbindbar ist und dabei das Anschlußende (2a) des Rohres (2) und eine dort vorgesehene Aufweitung (8) übergreift und festlegt. Die Aufweitung (8) kann vorgeformt oder durch eine in das Innere des Anschlußendes (2a) des Rohres (2) eingreifende Stützhülse (7) gebildet sein, wobei sich eine Aufweitung (8) mit einem Übergang (11) von dem eigentlichen Rohrquerschnitt (2) aus an diesem Anschlußende (2a) ergibt. Das Überwurfteil (5) hat an seiner das Anschlußende (2a) und die Aufweitung (8) in sich aufnehmenden Aufnahmeöffnung (4) eine gegenüber der Innenwand dieser Aufnahmeöffnung (4) radial einwärts gerichtete Verengung (9), deren Innenabmessung zumindest an der engsten Stelle kleiner als der größte Durchmesser der Außenseite der Aufweitung (8) des Rohres (2) ist, wobei diese Verengung (9) zweckmäßigerweise keine konische Innenfläche hat, die sich weitgehend flächig an den Übergang (11) von dem Rohr (2) zu seiner Aufweitung (8) anlegen kann, um Zugkräfte gut aufzunehmen und zu verteilen.

## Beschreibung

Die Erfindung betrifft einen Rohranschluß mit einem Anschlußteil und mit wenigstens einem oder mit wenigstens zwei Rohren sowie mit einem das Anschlußende des jeweiligen Rohres in Montagestellung mit einer Aufnahmeöffnung übergreifenden Überwurfteil, wobei das oder die Rohre an ihrem Anschlußende eine vorgeformte oder bei einem oder mehreren Rohren aus insbesondere elastischem Werkstoff oder aus Kunststoff durch eine in das Anschlußende des jeweiligen Rohres eingreifende Stützhülse erzeugte, mit der Durchlaßöffnung des Überwurfteiles korrespondierende Aufweitung aufweist oder aufweisen, die mit dem Überwurfteil, zum Beispiel einer Überwurfmutter, festlegbar oder einklemmbar ist oder sind.

Ein derartiger Rohranschluß ist für ein sehr elastisches Rohr oder einen Schlauch bekannt, wobei das Anschlußende durch eine an ihrer Außenseite konische Stützhülse stetig aufgeweitet wird und in eine entsprechend konische Durchlaßöffnung der Überwurfmutter eingreift.

Der der Stirnseite des Anschlußendes unmittelbar benachbarte Randbereich des Schlauches muß dabei frei bleiben, damit sich eine scharfe Kante der Stützhülse dort etwas eindrücken läßt, um den freien Rand selbst gegenüber dem Rand der Stützhülse etwas radial nach innen überstehen zu lassen und dadurch ein Herausgleiten des Rohres oder Schlauches in Montagestellung zu verhindern.

Somit besteht die Gefahr, daß bei entsprechenden Zugkräften auf das Rohr oder den Schlauch dieser der Stirnseite nahe Randbereich des Rohres oder Schlauches durch die Kante der Stützhülse abgeschert oder abgeschnitten wird und also nur eine relativ geringe Zugkraft aufgenommen werden kann. Außerdem muß die Montage sehr sorgfältig erfolgen, damit wirklich eine Einklemmung des Anschlußendes nahe der Stirnseite erzielt wird.

Dabei ist bei dieser vorveröffentlichten Lösung auch vorgesehen, daß der Konuswinkel der konischen Oberfläche der Stützhülse größer als der Konuswinkel der Innenseite der Durchlaßöffnung der Überwurfmutter ist, so daß eine Verklemmung tatsächlich nur nahe der Stirnseite des Anschlußendes und des insgesamt konisch aufgeweiteten Bereiches erzeugt werden kann. Entsprechend hohe Druckkräfte müssen von dem Anschlußende in Montagestellung aufgenommen werden.

Es besteht deshalb die Aufgabe, einen Rohranschluß der eingangs genannten Art zu schaffen, der eine Verbesserung der Aufnahme von Zugkräften bei gleichzeitig einfacher Montage erlaubt. Dabei sollen auch zwei oder mehr Rohre auf möglichst einfache Weise mit einem Anschluß mit entsprechend guter Zugentlastung versehen werden können.

Zur Lösung dieser Aufgabe ist der eingangs definierte Rohranschluß dadurch gekennzeichnet, daß das Überwurfteil an der das Anschlußende in sich aufnehmenden Aufnahmeöffnung eine gegenüber dem Verlauf der Innenwand der Aufnahmeöffnung radial einwärts gerichtete Verengung hat, deren Innenabmessung zumindest bereichsweise kleiner als der größte Durchmesser der Außenseite der Aufweitung des Rohres ist.

Dies führt zu einer guten Zugentlastung, weil die Stützhülse, die Aufweitung und die Aufnahmeöffnung des Überwurfteils korrespondieren, sich also gegenseitig insbesondere flächig berühren und bereits zu einer axialen Festlegung führen und weil außerdem die Verengung die Aufweitung des Rohres außenseitig erfaßt und bei einer Zugkraft auf das Rohr oder dessen axiale Verschiebung von dem Rohranschluß weg verhindert. Bei entsprechender Anphasung oder Abrundung der Verengung werden scharfe Kanten und die Gefahr eines Abscherens vermieden. Darüber hinaus muß das Anschlußende des Rohres nicht rechtwinklig zu seiner Längserstreckung abgelängt sein, sondern die Stirnseite des Anschlußendes kann auch in einer schrägen Ebene liegen oder eine unregelmäßige Form haben.

Darüber hinaus ergibt sich die Verklemmung oder Fixierung mit Hilfe des Überwurfteiles in einer günstigen Position, bei der beispielsweise eine als Überwurfteil dienende Überwurfmutter das Ende ihres Gewindes noch nicht erreicht hat, so daß später auch noch ein Nachziehen des Gewindes möglich ist. Eine Zugentlastung ist dabei schon einfach dadurch zu erreichen, daß das Überwurfteil an dem Anschlußteil fixiert wird.

Da die Außenseite der Aufweitung von der Verengung beaufschlagt wird und nicht eine Kante einer Stützhülse sich innenseitig in das Rohr eingraben muß, können auch höhere Kräfte ausgeübt werden, denen das Rohr aufgrund der Festigkeit seines Werkstoffes oder einer in seinem Inneren befindlichen Stützhülse gut widerstehen kann.

Die Verengung kann an der Aufnahmeöffnung des Überwurfteiles einen Innendurchmesser aufweisen, der kleiner als der kleine Außendurchmesser der Aufweitung des Anschlußendes des Rohres ist, und in Gebrauchsstellung kann sie insbesondere an dem Übergang der Außenseite des Rohres in die Aufweitung angeordnet sein. Somit wird praktisch die gesamte Aufweitung von dem Überwurfteil und insbesondere auch seiner Verengung übergriffen, so daß entsprechend hohe Zugkräfte aufgenommen werden können.

Der Innendurchmesser der Verengung der Aufnahmeöffnung kann dem Außendurchmesser des Rohres in dessen seiner Aufweitung benachbartem Bereich etwa entsprechen oder diesen Bereich mit einer Schiebetoleranz oder einem Spiel übergreifen. Somit kann das Überwurfteil, in vielen Fällen eine Überwurfmutter, auf das Rohr von dessen der Aufweitung abgewandter Seite aufgeschoben und verschoben werden, bis die Verengung an der Aufweitung angelangt ist, was zweckmäßigerweise in jedem Falle in montiertem Zustand erreicht ist.

Bei einem Rohranschluß der eingangs genannten Art mit einer in das oder die Anschlußenden jeweils eingreifenden Stützhülse kann die Stützhülse in Gebrauchs- oder Montagestellung innerhalb der Aufweitung des Rohres, in Längserstreckungsrichtung des Rohres gesehen, der Stirnseite der Aufweitung des Rohres näher enden, als die radiale Verengung an dem Überwurfteil angeordnet ist, und insbesondere in axialer Richtung lose sein. Somit wird die Stützhülse innerhalb des Rohres von dem Überwurfteil und dessen Verengung umschlossen und übergriffen, so daß eine Zugkraft auf das Rohr nicht dazu führen kann, daß die Aufweitung sich zurückverformt und durch die Verengung gleitet. Vor allem eine lose Stützhülse beugt dem vor, weil sie aufgrund ihrer Reibung gegenüber der Innenseite des Rohres oder Schlauches bei einer Zugkraft mit diesem in Richtung der Verengung mitbewegt wird und dadurch dann die Verklemmung gegenüber dem Überwurfteil und dessen Verengung automatisch und proportional zu der Zugkraft verändert.

Besonders vorteilhaft kann es sein, wenn die in axialer Richtung lose Stützhülse mit ihrem dem Überwurfteil abgewandten Ende in das Anschlußteil eingreift und gegenüber der im wesentlichen zylindrischen Innseite einer dafür vorgesehenen Ausnehmung insbesondere mittels eines Dicht- oder O-Ringes abgedichtet ist. Ergibt sich bei einer erhöhten Zugkraft an dem Rohr eine geringe axiale Mitbewegung der Stützhülse innerhalb des Überwurfteils, kann sie auch in dieser Ausnehmung des Anschlußteils axial verschoben werden, ohne daß dabei die Abdichtung an dieser Stelle aufgehoben oder undicht wird. Der Dichtring oder O-Ring erlaubt innerhalb der zylindrischen Ausnehmung eine entsprechende kolbenartige Verschiebung des in diese Ausnehmung eingreifenden Endes der Stützhülse. Dabei hat die Dichtung gegenüber dem freien Rand der Ausnehmung des Anschlußteils einen genügenden Abstand, um entsprechende Axialbewegungen unter Beibehaltung der Dichtwirkung zuzulassen.

Eine zweckmäßige Ausgestaltung des erfindungsgemäßen Rohranschlusses kann darin bestehen, daß die Aufweitung einen in axialer Richtung des Rohres sich erstreckenden Bereich großer Durchmesseränderung aufweist, der mit Abstand zur Stirnseite des Anschlußendes und insbesondere vor dem dem Anschlußteil abgewandten Ende einer gegebenenfalls vorgesehenen Stützhülse angeordnet ist, also von einer solchen Stützhülse freigelassen ist. Die Aufweitung kann also nahezu stufenförmig mit einem in axialer Richtung relativ kurzen Bereich einer zweckmäßigerweise konischen Durchmesservergrößerung gebildet sein, wobei sich in diesem Bereich ein relativ großer Winkel zwischen der Längserstreckung des Rohres und dem Querschnitt dieses schrägen Überganges ergibt, was ein gutes Widerlager für eine diese Aufweitung übergreifende Verengung des Überwurfteiles bildet.

Die Aufweitung zwischen der Durchmesseränderung und der Stirnseite des Anschlußendes des jeweiligen Rohres sowie insbesondere die Innenseite der Durchlaßöffnung des Überwurfteiles können im wesentlichen konisch ausgebildet sein und der Außendurchmesser der Aufweitung kann den Außendurchmesser des Rohres um das Maß der Durchmesseränderung übertreffen. Dies ergibt in vorteilhafter Weise eine weitgehend Aufweitung, die entsprechend einfach herstellbar ist und eine entsprechend einfach herstellbare Innenkontur des Überwurfteiles erlaubt.

In vorteilhafter Weise kann dabei die Verengung an dem dem Anschlußteil abgewandten Ende der Aufnahmeöffnung des Überwurfteiles dessen engste Stelle bildend angeordnet sein. Somit nimmt das Überwurfteil die gesamte Aufweitung, nämlich eine erste Durchmesseränderung und einen sich daran anschließenden, im wesentlichen zylindrischen Bereich größeren Durchmessers als des Rohrdurchmessers vollständig in sich auf.

Bei einem Rohranschluß für zwei insbesondere parallele Rohre kann ein Überwurfteil mit zwei demgemäß vorzugsweise achsparallelen Aufnahmeöffnungen zum Übergreifen von gleichzeitig zwei in ihrem Inneren gegebenenfalls eine Stützhülse aufweisenden Aufweitungen von Rohren oder Schläuchen vorgesehen sein und an wenigstens einer der Aufnahmeöffnungen, insbesondere an beiden Aufnahmeöffnungen des Überwurfteiles kann jeweils eine radiale Verengung angeordnet sein. Dadurch wird die Montage von zwei Rohren möglich, die nur einen relativ geringen Abstand zueinander haben. Deren Montage wird vereinfacht, weil statt einzelner Überwurfmuttern eine Art Zwillingsteil in Form des erwähnten Überwurfteiles mit zwei Aufnahmeöffnungen vorgesehen ist, die an die Stelle von Überwurfmuttern treten.

Eine Ausgestaltung eines Rohranschlusses für zwei Rohre kann dabei darin bestehen, daß die mit einem gemeinsamen Überwurfteil mit zwei Aufnahmeöffnungen für zwei Rohre in Gebrauchsstellung verbundenen Anschlußteile ein festes Verbindungsteil miteinander haben und daß wenigstens ein Befestigungselement zum Verbinden und Anziehen des Überwurfteiles an das Verbindungsteil der Anschlußteile vorgesehen ist. Bei dieser Ausgestaltung eines Rohranschlusses für zwei Rohre ist also praktisch nur ein einziges Anschlußteil und ein einziges Überwurfteil vorgesehen, so daß eine gegenseitige Verbindung und axiale Bewegung dieser Teile die entsprechende Verklemmung und Fixierung an beiden Rohren und deren Aufweitungen bewirkt.

Beispielsweise kann das Überwurfteil mit den Anschlußteilen mittels wenigstens einer gegenüber den Anschlußöffnungen versetzten Verschraubung, insbesondere einer durch eine Lochung oder Bohrung greifenden Schraube, einem Stehbolzen oder dergleichen verbindbar und anziehbar sein. Eine einzige Verschraubung bewirkt dann die Montage und vorteilhafte Festlegung der Aufweitungen zweier paralleler Rohre, wie sie im Heizungsbau häufig unmittelbar benachbart zueinander angeordnet werden, um beispielsweise den Vorlauf und den Rücklauf eines Heizkörpers zu bilden.

Beispielsweise kann an dem Verbindungsteil der Anschlußteile insbesondere zwischen den beiden Aufnahmen für eventuelle Stützhülsen eine Gewindebohrung mit einem Innengewinde für eine von dem Überwurfteil her eindrehbare Schraube oder an dem Überwurfteil eine Durchgangsbohrung für einen an dem Verbindungsteil fixierten Gewindebolzen für eine das Überwurfteil in Gebrauchsstellung übergreifende Mutter vorgesehen sein. Dies erlaubt eine Montage von einer Seite her, wobei das mit Hilfe eines Verbindungsteiles verdoppelte Anschlußteil und das entsprechende Überwurfteil an den beiden Rohren jeweils so angeordnet sein können, daß die Betätigung der Verbindungsschraube oder der Mutter von einer für einen Monteur gut erreichbaren Seite her erfolgen kann. Eine einzige Schraubbewegung legt dabei in zweckmäßiger Weise ein Überwurfteil an zwei Rohren fest und fixiert diese mit Hilfe der erfindungsgemäß vorgesehenen Verengungen an deren Aufweitungen.

Die Anschlußteile und deren Verbindungsteil können einstückig miteinander verbunden oder verschweißt sein. Vor allem die einstückige, im Druckgußverfahren hergestellte Anordnung ist dabei vorteilhaft, weil das Verbindungsteil die beiden Anschlußteile von Anfang an bestmöglich verbindet. Gleichzeitig kann bei einer solchen Fertigung auch die Verengung der Aufnahmeöffnungen schon bei der Herstellung angeformt werden.

Es sei noch erwähnt, daß der Konuswinkel der Aufweitung - und damit auch der Stützhülse und der Aufnahmeöffnung des Überwurfteils - etwa ein Grad bis fünf Grad, insbesondere etwa zwei Grad betragen kann. Ein derartig schwacher Konus führt bei einer axialen Belastung des Rohres zu einer sicheren gegenseitigen Verklemmung und Erhöhung der Zugentlastung. Dabei kann die axiale Länge der Aufweitung etwa einen Zentimeter mit zwei Zentimeter, insbesondere etwa eineinhalb Zentimeter oder sechzehn Milimeter betragen. Dies ist eine ausreichend große Abmessung für eine Aufweitung, um das entsprechende Rohr axial festlegen zu können.

Der Anfang der Aufweitung kann etwa rechtwinklig zu seiner Längserstreckung ausgebildet sein. Dies führt am Übergang von dem Rohr zu seiner Aufweitung zu einem Absatz, der aber das Zusammenwirken mit der an dem Überwurfteil vorgesehenen Verengung verbessert.

Vor allem bei Kombination einzelner oder mehrerer der vorbeschriebenen Merkmale und Maßnahmen ergibt sich ein Rohranschluß, bei welchem für hohe Zugkräfte eine Aufweitung des Rohres mit einer Verengung des Überwurfteiles zusammenwirkt, so daß schon beim Zusammenstecken der zusammenwirkenden Teile ein Kraftschluß gebildet wird, der durch Anziehen einer Gewindeverbindung entsprechend fixiert werden kann. Ein teilweises Eingraben beispielsweise eines scharfen Randes einer Stützhülse in einen weichen Rohrwerkstoff mit der Gefahr einer Verletzung des Rohres oder Schlauches durch diese scharfe Kante kann vermieden werden. Darüber hinaus wird die Krafteinleitung an der Außenseite des jeweiligen Rohres wirksam gemacht, wo auch die Festigkeit des Rohres gegen eine Zusammendrückung ausgenutzt werden kann.

Nachstehend sind Ausführungsbeispiele der Erfindung anhand der Zeichnung näher beschrieben. Es zeigt in zum Teil schematisierter Darstellung:
- Fig.1: in explosionsartiger beziehungsweise vereinzelter Darstellung einen Längsschnitt der vier wesentlichen Teile, die einen erfindungsgemäßen Rohranschluß bilden, nämlich ein Anschlußteil, eine Stützhülse, das Anschlußende des abgebrochen dargestellten Rohres mit einer an seinem Anschlußende angeordneten Aufweitung und ein dieses Anschlußende des Rohres übergreifendes und mit dem Anschlußteil verbindbares Überwurfteil,
- Fig.2: eine Stirnansicht des Anschlußteiles mit Blick auf eine Aufnahme für die Stützhülse,
- Fig.3: eine Stirnansicht derjenigen Stirnseite der Stützhülse, die in Gebrauchsstellung in das Anschlußteil eingreift, wobei an der Stützhülse in diesem Bereich ein Mehrkant vorgesehen ist, der in einen Gegen-Mehrkant in dem Anschlußteil paßt,
- Fig.4: eine teilweise im Längsschnitt dargestellte Seitenansicht des erfindungsgemäßen Rohranschlusses nach dem Zusammenfügen der in Fig.1 dargestellten Teile,
- Fig.5: eine explosionsartig auseinandergezogene Darstellung eines Rohranschlusses für gleichzeitig zwei parallele Rohre analog der Darstellung in Fig.1 und
- Fig.6: die teilweise im Längsschnitt gehaltene Darstellung des aus den Teilen gemäß Fig.5 montierten Rohranschlusses für zwei parallele Rohre,
- Fig. 7: in vergrößertem Maßstab einen Längsschnitt einer abgewandelten Aufweitung des Rohres.

In den nachfolgenden Ausführungsbeispielen erhalten in ihrer Funktion übereinstimmende Teile auch bei abgewandelter Gestaltung übereinstimmende Bezugszahlen.

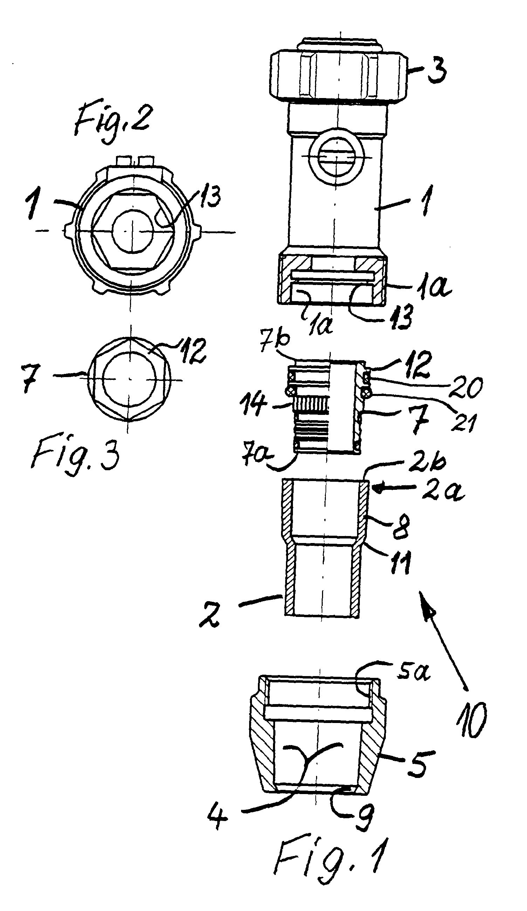

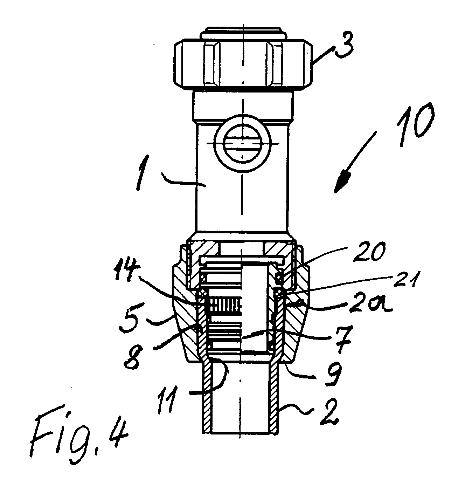

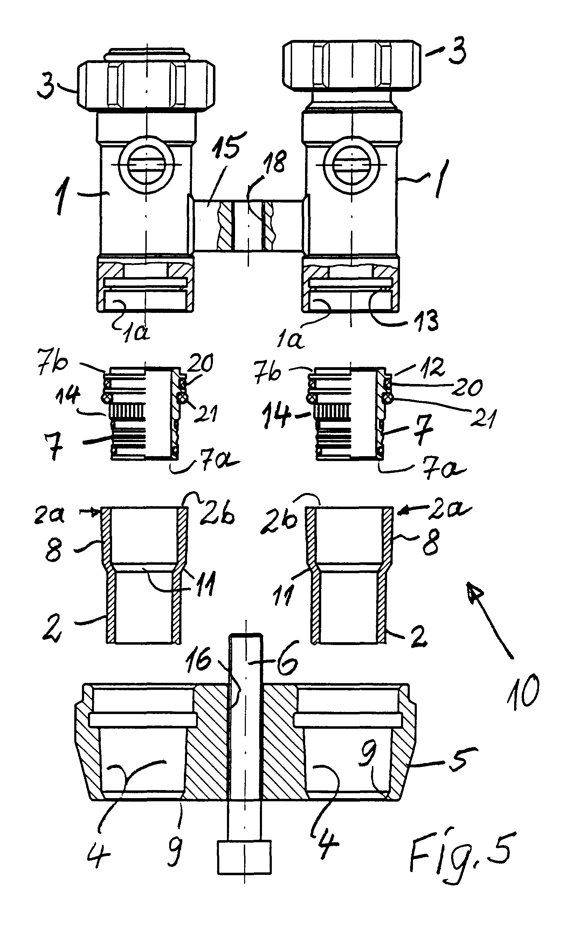

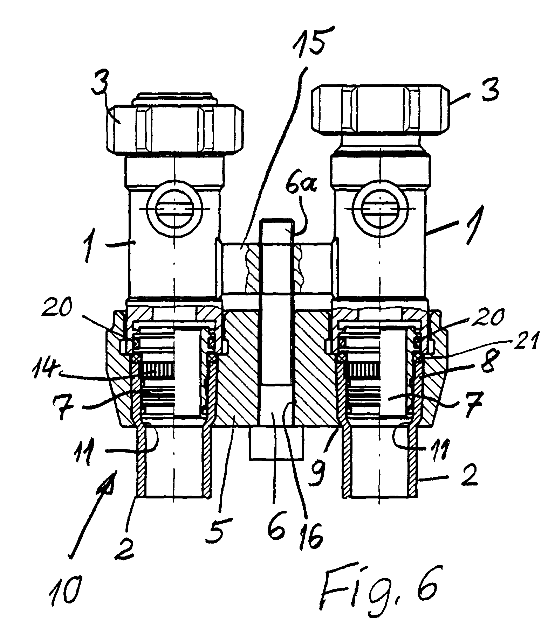

Ein im ganzen mit 10 bezeichneter Rohranschluß, der in unterschiedlichen Ausführungsbeispielen in den Figuren 4 und 6 in montiertem Zustand dargestellt ist, weist gemäß den Figuren 1 und 5 jeweils ein Anschlußteil 1 auf, womit gemäß Fig.1 und 4 ein zu diesem Rohranschluß 10 gehörendes Rohr 2, gemäß Fig.5 und 6 zwei derartige Rohre 2 erfaßt und an einer weiterführenden Leitung, einem Behälter oder dergleichen angeschlossen werden können. Im Ausführungsbeispiel hat das Anschlußteil 1 dazu eine entsprechende Kupplungsmutter 3.

Zu dem Rohranschluß 10 gehört außerdem in beiden Ausführungsbeispielen jeweils ein das Anschlußende 2a des jeweiligen Rohres 2 in Montagestellung mit einer Aufnahmeöffnung 4 übergreifendes Überwurfteil 5, welches gemäß Fig.1 bis 4 eine Überwurfmutter sein kann, während in Fig.5 ein Überwurfteil 5 mit zwei Aufnahmeöffnungen 4 vorgesehen ist, das in noch zu beschreibender Weise mit einer Schraube 6 an einem entsprechend gestaltetem Anschlußteil 2 befestigt und diesem gegenüber angezogen werden kann.

Das beziehungsweise die Rohre 2 haben an ihrem Anschlußende 2a eine vorgeformte oder gegebenenfalls durch eine in das jeweilige Anschlußende 2a eingreifende Stützhülse 7 erzeugte, mit der Aufnahmeöffnung 4 des Überwurfteiles 5 korrespondierende Aufweitung 8, die von dem Überwurfteil 5 erfaßbar und mit dessen Hilfe festlegbar oder einklemmbar ist, was im folgenden näher beschrieben wird.

Dabei ist in allen Ausführungsbeispielen eine Stützhülse 7 vorgesehen, die vor allem bei Rohren 2 aus elastischem Werkstoff oder aus Kunststoff oder weichem Metall zweckmäßig ist.

Für eine zugfeste Verbindung zwischen dem Anschlußteil 1 und dem Anschlußende 2a des Rohres 2 hat das jeweilige Überwurfteil 5 an seiner das Anschlußende 2a in sich aufnehmenden Aufnahmeöffnung 4 eine gegenüber dem Verlauf der Innenwand dieser Aufnahmeöffnung 4 radial einwärts gerichtete Verengung 9, deren Innenabmessung kleiner als der größte Durchmesser der Außenseite der Aufweitung 8 des Rohres 2 ist.

Diese Verengung 9 ist im Ausführungsbeispiel als umlaufender, innenseitig etwas konischer Ring oder Bund ausgestaltet, wie man es in den Figuren 1 und 5 besonders gut erkennt.

Die Verengung 9 an der Aufnahmeöffnung 4 des Überwurfteiles 5 weist dabei einen kleinsten Innendurchmesser auf, der kleiner als der kleine Außendurchmesser der Aufweitung 8 des Anschlußendes 2a des Rohres 2 ist und in Gebrauchsstellung gemäß den Figuren 4 und 6 an dem Übergang 11 der Außenseite des Rohres 2 in die Aufweitung 8 angeordnet ist, wobei dieser Übergang 11 gemäß Figur 1 und 5 jeweils durch eine etwas konische Durchmesservergrößerung des Rohres 2 gebildet ist, so daß dieser Übergang 11 und das bis zur Stirnseite 2b verlaufende Anschlußende 2a des Rohres 2 insgesamt die Aufweitung 8 bilden.

Der Innendurchmesser der Verengung 9 der Aufnahmeöffnung 4 entspricht dabei etwa dem Außendurchmesser des Rohres 2 in dessen seiner Aufweitung 8 und dem Übergang 11 unmittelbar benachbarten Bereich oder übergreift diesen Bereich mit einer Schiebetoleranz oder einem Spiel und liegt an dem Übergang 11 - auch aufgrund seiner konischen Gestaltung - in Montagestellung etwa flächig an, wie man es in den Figuren 4 und 6 deutlich erkennt. Dies ergibt eine Verbindung des Rohres 2 mit dem Anschlußteil 1 von hoher Zugfestigkeit, weil ein guter Formschluß gebildet wird, der über das Überwurfteil 5 und im Ausführungsbeispiel gemäß Fig.1 und 4 über das Innengewinde 5a des als Überwurfmutter ausgebildeten Überwurfteiles 5 auf das Außengewinde 1a des Anschlußteiles 1 übertragen wird. Im Ausführungsbeispiel nach Fig.5 und 6 dient die Schraube 6 dazu, die von den Rohren 2 über die Verengung 9 auf das Überwurfteil 5 eventuell ausgeübten Zugkräfte in das Anschlußteil 1 einzuleiten.

Die Stützhülse 7 endet in Gebrauchs- oder Montagestellung innerhalb der Aufweitung 8 des Rohres 2, in Längserstreckungsrichtung des Rohres 2 gesehen, der Stirnseite 2b der Aufweitung 8 des Rohres 2 näher, als die radiale Verengung 9 an dem Überwurfteil 5 angeordnet ist, wobei die Stützhülse 7 außerdem in axialer Richtung lose ist. In den Figuren 4 und 6 erkennt man, daß die Stützhülse 7 von innen her bis an den Übergang 11 reicht, in diesen aber nicht eingreift. Somit übergreift die Verengung 9 über den Übergang 11 auch die Stirnseite 7a der Stützhülse 7.

Da die Stützhülse 7 lose ist, würde eine Zugkraft an dem Rohr 2 diese mit der Innenseite der Aufweitung 8 reibschlüssig verbundene Stützhülse 7 in axialer Richtung mitnehmen, wodurch die Verklemmung an der Verengung 9 mit zunehmender Zugkraft ihrerseits zunimmt, was die Zugentlastung weiter vergrößert.

Dabei ist in den Ausführungsbeispielen vorgesehen, daß die Innenseite der Aufnahmeöffnung 4 die Aufweitung 8 und die Stützhülse 7 in Gebrauchsstellung einander flächig berühren. Aufgrund ihrer übereinstimmenden konischen Gestaltung wird der Effekt einer automatischen Verstärkung der Verklemmung der Aufweitung bei zunehmender Zugkraft gefördert.

Ferner erkennt man, daß die in axialer Richtung lose Stützhülse 7 mit ihrem dem Überwurfteil 5 abgewandten Ende 7b in das Anschlußteil 1 eingreift und gegenüber der zylindrischen Innseite einer dafür vorgesehenen Ausnehmung 1a mittels eines Dicht- oder O-Ringes 20 abgedichtet ist. Wird also eine Zugkraft auf das Rohr 2 ausgeübt und dadurch aufgrund der im Ausführungsbeispiel schwach konischen Ausbildung der Stützhülse 7, der flächig daran anliegenden Aufweitung 8 und der daran wiederum flächig anliegenden Aufnahmeöffnung 4 des Überwurfteils 5 die in axialer Richtung lose Stützhülse 7 etwas in axialer Richtung mitbewegt, bleibt die Abdichtung gegenüber dem Anschlußteil 1 und seiner Ausnehmung 1a dennoch erhalten, weil der Dichtring 20 von dem Ende der Ausnehmung 1a einen größeren axialen Abstand hat, als es einer solchen axialen Mitnahmebewegung der Stützhülse entspricht.

Ein weiterer Dichtring 21 kann die Stirnseite 2b der Rohr-Aufweitung 8 beaufschlagen und die Dichtwirkung noch verbessern.

Es sei an dieser Stelle erwähnt, daß die Stützhülse 7 an ihrem in das Anschlußteil 1 eingreifenden Ende 7b eine Profilierung hat, durch die eine gegenseitige Verdrehung der Stützhülse 7 gegenüber dem Anschlußteil 1 verhindert ist. Man erkennt im Ausführungsbeispiel, daß diese Profilierung gemäß Fig.3 ein Sechskant 12 ist, der in einen entsprechenden Innensechskant 13 des Anschlusses 1 paßt. Dadurch wird eine Verdrehung der Stützhülse 7 und damit eine Verdrillung des Rohres oder Schlauches bei der Montage vemieden.

Ferner erkennt man an der Stützhülse 7 eine Rändelung 14, die ein Verdrehen des Rohres oder Schlauches auf der Stützhülse 7 insbesondere während der Montage ebenfalls verhindert.

Die Aufweitung 8 weist einen in axialer Richtung des Rohres 2 sich erstreckenden Bereich einer großen Durchmesseränderung auf, der als Übergang 11 bereits erwähnt wurde. Dieser Bereich oder Übergang 11 ist mit Abstand zur Stirnseite 2b des Anschlußendes 2a und auch vor dem dem Anschlußteil 1 abgewandten Ende der im Ausführungsbeispiel jeweils vorgesehenen Stützhülse 7 angeordnet, also von der Stützhülse 7 freigelassen, so daß bei einer Zugbeanspruchung des Rohres 2 von der Verengung 9 des Überwurfteiles 5 gegebenenfalls sogar eine geringfügige Verformung des Überganges 11 gegen die Stirnseite 7a der Stützhülse 7 zur noch besseren Aufnahme von Zugkräften möglich ist, ohne daß die Gefahr einer Abscherung von Werkstoff des Rohres 2 besteht, zumal die Durchmesservergrößerung nur etwa gleich oder sogar etwas kleiner als die Wanddicke des Rohres 2 ist. Die Verengung 9 liegt dabei an dem durch eine Durchmesservergrößerung gebildeten Übergang 11 flächig an, so daß auch die Flächenpressung klein beziehungsweise in tolerierbaren Grenzen gehalten wird.

Von dem Übergang 11 abgesehen, ist die Aufweitung 8 zwischen der Durchmesserveränderung und der Stirnseite 2b des Anschlußendes 2a ebenso wie die Innenseite der Durchlaß- oder Aufnahmeöffnung 4 konisch im Sinne einer weiteren Durchmesserzunahme bis zur Stirnseite 2b ausgebildet. Der Außendurchmesser dieses im wesentlichen konischen Teiles der Aufweitung 8 übertrifft dabei den Außendurchmesser des Rohres 2 in diesem Falle etwa um das Maß der Durchmesseränderung, das heißt die äußere Oberfläche des Rohres 2 und die Innenseite der Aufweitung 8 können etwa auf demselben gedachten Kegel liegen. Im Ausführungsbeispiel ist die Durchmesseränderung sogar etwas geringer als die Wandstärke des Rohres. Die Innenseite der Aufnahmeöffnung 4, die Aufweitung 8 und die Stützhülse 7 berühren sich demgemäß in Gebrauchsstellung flächig, was eine Kraftübertragung bei einer Zugbelastung des Rohres 2 unterstützt und fördert.

Die Verengung 9 und dabei ihre engste Stelle ist im Ausführungsbeispiel an dem dem Anschlußteil 1 in Montagestellung abgewandten Ende der Aufnahmeöffnung 4 des Überwurfteiles 5 dessen engste Stelle bildend angeordnet. Aufgrund der an der Innenseite konischen Gestaltung dieser Verengung 9 ergibt sich dabei eine relativ scharfe, innen umlaufende Kante an dem kleinsten Durchmesser dieser Verengung 9, die jedoch die Außenseite des Rohres in Gebrauchsstellung nicht beschädigt, weil die konische Innenseite der Verengung 9 an dem etwa mit gleichem Winkel konischen Übergang 11 außenseitig flächig anliegt.

Im Ausführungsbeispiel gemäß Fig.5 und 6 ist ein Überwurfteil 5 mit zwei achsparallelen Aufnahmeöffnungen 4 zum Übergreifen von gleichzeitig zwei in ihrem Inneren im Ausführungsbeispiel eine Stützhülse 7 aufweisenden Aufweitungen 8 von Rohren 2 vorgesehen, wobei an den Aufnahmeöffnungen 4 des Überwurfteiles 5 jeweils eine radiale Verengung 9 angeordnet ist. Dabei sind die einzelnen Teile, also das Anschlußteil 1, die Stützhülse 7, die Rohre 2 mit ihrer Aufweitung 8, die dabei vorgesehenen Übergänge 11 und die Aufnahmeöffnungen 4 in dem Überwurfteil 5 jeweils in gleicher Weise gestaltet und ausgebildet wie bei dem Ausführungsbeispiel nach den Figuren 1 bis 4. Es ist lediglich eine Verdoppelung vorgesehen, die vor allem dadurch erreicht wird, daß die mit einem gemeinsamen Überwurfteil 5 mit zwei Aufnahmeöffnungen 4 für zwei Rohre 2 in Gebrauchsstellung verbundenen Anschlußteile 1 ein festes Verbindungsteil 15 miteinander haben und ein noch zu erläuterndes Befestigungselement zum Verbinden und Anziehen des Überwurfteiles 5 an das Verbindungsteil 15 der Anschlußteile 1 vorgesehen ist.

Das Überwurfteil 5 ist in diesem Ausführungsbeispiel gemäß Fig.5 und 6 mit den Anschlußteilen 1 mittels einer gegenüber den Anschlußöffnungen 4 versetzten Verschraubung, im Ausführungsbeispiel mit Hilfe der durch eine Lochung oder Bohrung 16 des Überwurfteiles 5 greifenden Schraube 6 verbindbar oder anziehbar, wobei das Verbindungsteil 15 der Anschlußteile 1 zwischen den beiden Aufnahmen für die Stützhülsen 7 eine Gewindebohrung 18 mit einem Innengewinde für die von dem Überwurfteil 5 her eindrehbare Schraube 6 hat. Es wäre aber auch denkbar, daß an dem Verbindungsteil 15 ein Gewindebolzen fest installiert ist, der beim Zusammenstecken der einzelnen Teile durch die Bohrung 16 des Überwurfteiles 5 hindurchgreift und mit Hilfe einer Mutter angezogen werden kann. In beiden Fällen ist diese gegenseitige Verschraubung einfach, weil entweder der Kopf der Schraube 6 oder die erwähnte Mutter von der Seite des Überwurfteiles 5 zugänglich sind, statt daß zwischen die Anschlußteile 1 mit einem entsprechenden Werkzeug eingegriffen werden müßte. Gegebenenfalls könnte die Schraube 6 aber auch an einem Überstand 6a über das Verbindungsteil 15 mit einer Mutter zusammenwirken.

Das Verbindungsteil 15 kann mit den Anschlußteilen 1 verschweißt oder einstückig verbunden sein, um die Herstellung und vor allem die Montage zu vereinfachen.

Der Rohranschluß 10 besteht im wesentlichen aus einem Anschlußteil 1 und dem anzuschließenden Rohr 2 sowie einem Überwurfteil 5, beispielsweise einer Überwurfmutter, die mit dem Anschlußteil 1 verbindbar ist und dabei das Anschlußende 2a des Rohres 2 und eine dort vorgesehene Aufweitung 8 übergreift und festlegt. Die Aufweitung 8 kann vorgeformt oder durch eine in das Innere des Anschlußendes 2a des Rohres 2 eingreifende Stützhülse 7 gebildet sein, wobei sich eine Aufweitung 8 mit einem Übergang 11 von dem eigentlichen Rohrquerschnitt 2 aus an diesem Anschlußende 2a ergibt. Das Überwurfteil 5 hat an seiner das Anschlußende 2a und die Aufweitung 8 in sich aufnehmenden Aufnahmeöffnung 4 eine gegenüber der Innenwand dieser Aufnahmeöffnung 4 radial einwärts gerichtete Verengung 9, deren Innenabmessung zumindest an der engsten Stelle kleiner als der größte Durchmesser der Außenseite der Aufweitung 8 des Rohres 2 ist, wobei diese Verengung 9 zweckmäßigerweise keine konische Innenfläche hat, die sich weitgehend flächig an den Übergang 11 von dem Rohr 2 zu seiner Aufweitung 8 anlegen kann, um Zugkräfte gut aufzunehmen und zu verteilen.

Der Konuswinkel der Aufweitung 8 kann etwa ein Grad bis fünf Grad, im Ausführungsbeispiel etwa zwei Grad betragen. Die axiale Länge der Aufweitung 8 beträgt zweckmäßigerweise etwa einen bis zwei Zentimeter, insbesondere etwa eineinhalb Zentimeter oder sechzehn Milimeter.

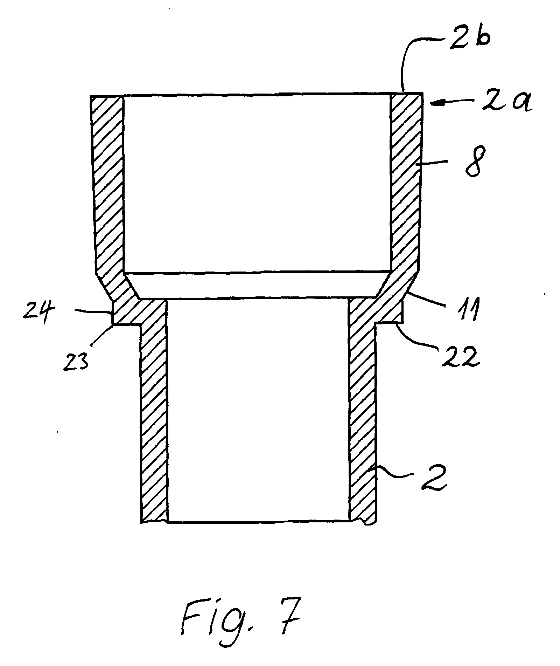

In Fig. 7 ist dargestellt, daß der Anfang 22 der Aufweitung 8, in diesem Fall der Anfang des zu dieser Aufweitung 8 gehörenden Übergangs 11 etwa rechtwinklig zu seiner Längsersteckung und zur Längserstreckung des Rohres 2 ausgebildet sein kann. Es entsteht dann gegenüber dem Rohr 2 ein radial abstehender Absatz, der an einer in der Regel etwas gerundeten oder abgeschrägten Kante 23 in eine zunächst zylindrische Oberfläche 24 übergeht, von welcher dann der weitere Teil des Übergangs 11 ausgeht. An dieser "Kante" 23 kann die Verengung des Überwurfteils 5 im wesentlichen linienförmig zur Anlage kommen und vor allem bei einem Rohr 2 aus Kunststoff oder relatv weichem Werkstoff eine gegenseitige Anpassung mit entsprechend guter Kraftübertragung bewirken.

## Patentansprüche

1. Rohranschluß (10) mit einem Anschlußteil (1) und mit wenigstens einem oder mit wenigstens zwei Rohren (2) sowie mit einem das Anschlußende (2a) des jeweiligen Rohres (2) in Montagestellung mit einer Aufnahmeöffnung (4) übergreifenden Überwurfteil (5), wobei das oder die Rohre (2) an ihrem Anschlußende (2a) eine vorgeformte oder bei einem oder mehreren Rohren aus insbesondere elastischem Werkstoff oder aus Kunststoff durch eine in das Anschlußende (2a) des jeweiligen Rohres (2) eingreifende Stützhülse (7) erzeugte, mit der oder den Aufnahmeöffnungen (4) des Überwurfteiles (5) korrespondierende Aufweitung (8) aufweist oder aufweisen, die mit dem Überwurfteil (5), zum Beispiel einer Überwurfmutter, festlegbar oder einklemmbar ist oder sind, **dadurch gekennzeichnet,** daß das Überwurfteil (5) an der das Anschlußende (2a) in sich aufnehmenden Aufnahmeöffnung (4) eine gegenüber dem Verlauf der Innenwand der Aufnahmeöffnung (4) radial einwärts gerichtete Verengung (9) hat, deren Innenabmessung zumindest bereichsweise kleiner als der größte Durchmesser der Außenseite der Aufweitung (8) des Rohres (2) ist.

2. Rohranschluß nach Anspruch 1, dadurch gekennzeichnet, daß die Verengung (9) an der Aufnahmeöffnung (4) des Überwurfteiles (5) einen Innendurchmesser aufweist, der kleiner als der kleine Außendurchmesser der Aufweitung (8) des Anschlußendes (2a) des Rohres (2) ist, und in Gebrauchsstellung insbesondere an dem Übergang (11) der Außenseite des Rohres (2) in die Aufweitung (8) angeordnet ist.

3. Rohranschluß nach Anspruch 1 oder 2, dadurch gekennzeichnet, daß der Innendurchmesser der Verengung (9) der Aufnahmeöffnung (4) dem Außendurchmesser des Rohres (2) in dessen seiner Aufweitung (8) benachbartem Bereich etwa entspricht oder diesen Bereich mit einer Schiebetoleranz oder einem Spiel übergreift.

4. Rohranschluß mit einer in das oder die Anschlußenden (2a) jeweils eingreifenden Stützhülse (7) nach einem der Ansprüche 1 bis 3, dadurch gekennzeichnet, daß die Stützhülse (7) in Gebrauchs- oder Montagestellung innerhalb der Aufweitung (8) des Rohres (2), in Längserstreckungsrichtung des Rohres (2) gesehen, der Stirnseite (2b) der Aufweitung (8) des Rohres (2) näher endet, als die radiale Verengung (9) an dem Überwurfteil (5) angeordnet ist, und insbesondere in axialer Richtung lose ist.

5. Rohranschluß nach einem der Ansprüche 1 bis 4, dadurch gekennzeichnet, daß die in axialer Richtung lose Stützhülse (7) mit ihrem dem Überwurfteil (5) abgewandten Ende (7b) in das Anschlußteil (1) eingreift und gegenüber der zylindrischen Innenseite einer dafür vorgesehenen Ausnehmung (1a) insbesondere mittels eines Dicht- oder O-Ringes (20) abgedichtet sind.

6. Rohranschluß nach einem der Ansprüche 1 bis 5, dadurch gekennzeichnet, daß die Aufweitung (8) einen in axialer Richtung des Rohres (2) sich erstreckenden Bereich großer Durchmesseränderung aufweist, der mit Abstand zur Stirnseite (2b) des Anschlußendes (2a) und insbesondere vor dem dem Anschlußteil (1) abgewandten Ende einer gegebenenfalls vorgesehenen Stützhülse (7) angeordnet, also von einer solchen Stützhülse (7) freigelassen ist.

7. Rohranschluß nach einem der Ansprüche 1 bis 6, dadurch gekennzeichnet, daß die Verengung (9) mit ihrer Innenfläche an dem Übergang (11) von dem Rohr (2) zu der Aufweitung (8) in Montagestellung flächig anliegt.

8. Rohranschluß nach einem der Ansprüche 1 bis 7, dadurch gekennzeichnet, daß die Aufweitung (8) zwischen der Durchmesserveränderung und der Stirnseite (2b) des Anschlußendes (2a) sowie insbesondere die Innenseite der Aufnahmeöffnung (4) im wesentlichen konisch ausgebildet sind und der Außendurchmesser der Aufweitung (8) den Außendurchmesser des Rohres um das Maß der Durchmesseränderung übertrifft.

9. Rohranschluß nach einem der Ansprüche 1 bis 8, dadurch gekennzeichnet, daß die Innenseite der Aufnahmeöffnung (4) des Überwurfteils (5), die Aufweitung (8) und die Stützhülse (7) einander in Gebrauchsstellung flächig berühren.

10. Rohranschluß nach einem der Ansprüche 1 bis 9, dadurch gekennzeichnet, daß die Verengung (9) an dem dem Anschlußteil (1) abgewandten Ende der Aufnahmeöffnung (4) des Überwurfteiles dessen engste Stelle bildend angeordnet ist.

11. Rohranschluß nach einem der Ansprüche 1 bis 10, dadurch gekennzeichnet, daß ein Überwurfteil (5) mit zwei vorzugsweise achsparallelen Aufnahmeöffnungen (4) zum Übergreifen von gleichzeitig zwei in ihrem Inneren gegebenenfalls eine Stützhülse (7) aufweisenden Aufweitungen (8) von Rohren (2) vorgesehen ist und an wenigstens einer der Aufnahmeöffnungen, insbesondere an beiden Aufnahmeöffnungen (4) des Überwurfteiles (5) jeweils eine radiale Verengung (9) angeordnet ist.

12. Rohranschluß nach einem der Ansprüche 1 bis 11, dadurch gekennzeichnet, daß die mit einem gemeinsamen Überwurfteil (5) mit zwei Aufnahmeöffnungen (4) für zwei Rohre (2) in Gebrauchsstellung verbundenen Anschlußteile (1) ein festes Verbindungsteil (15) miteinander haben und daß wenigstens ein Befestigungselement zum Verbinden und Anziehen des Überwurfteiles (5) an das Verbindungsteil (15) der Anschlußteile (1) vorgesehen ist.

13. Rohranschluß nach Anspruch 11 oder 12, dadurch gekennzeichnet, daß das Überwurfteil (5) mit den Anschlußteilen (1) mittels wenigstens einer gegenüber den Anschlußöffnungen (4) versetzten Verschraubung, insbesondere einer durch eine Lochung oder Bohrung (16) greifenden Schraube (6), einem Stehbolzen oder dergleichen verbindbar und anziehbar ist.

14. Rohranschluß nach einem der Ansprüche 11 bis 13, dadurch gekennzeichnet, daß an dem Verbindungsteil (15) der Anschlußteile (1) insbesondere zwischen den beiden Aufnahmen für eventuelle Stützhülsen (7) eine Gewindebohrung (18) mit einem Innengewinde für eine von dem Überwurfteil (5) her eindrehbare Schraube (6) oder an dem Überwurfteil eine Durchgangsbohrung für einen an dem Verbindungsteil fixierten Gewindebolzen für eine das Überwurfteil (5) in Gebrauchsstellung übergreifende Mutter vorgesehen ist.

15. Rohranschluß nach einem der Ansprüche 11 bis 14, dadurch gekennzeichnet, daß die Anschlußteile (1) und deren Verbindungsteil (15) einstückig miteinander verbunden oder verschweißt sind.

16. Rohranschluß nach einem der Ansprüche 1 bis 15, dadurch gekennzeichnet, daß der Konuswinkel der Aufweitung (8) etwa ein Grad bis fünf Grad, insbesondere etwa zwei Grad beträgt.

17. Rohranschluß nach einem der Ansprüche 1 bis 16, dadurch gekennzeichnet, daß die axiale Länge der Aufweitung (8) etwa ein Zentimeter bis zwei Zentimeter, insbesondere etwa eineinhalb Zentimeter oder sechzehn Milimeter beträgt.

18. Rohranschluß nach einem der Ansprüche 1 bis 17, dadurch gekennzeichnet, daß der Anfang (22) der Aufweitung (8) etwa rechtwinklig zu seiner Längserstreckung und zur Längserstreckung des Rohres (2) ausgebildet ist.
